# EUROPEAN PATENT APPLICATION

(11) **EP 4 279 150 A1**
(43) Date of publication of application: **22.11.2023**
(21) Application number: 23173687.7
(22) Date of filing: 16.05.2023
(51) Int. Cl.: A62C 35/02, A62C 3/08, A62C 99/00

(54) **CONSTANT BLEND RATIO OF FIRE SUPPRESSANT AGENTS DURING DISCHARGE**

(30) Priority: 20.05.2022 US 202263344275 P; 11.08.2022 US 202217885746
(71) Applicant: Kidde Graviner Limited, Shirley, Solihull B90 4SS (GB)
(72) Inventor: BALDWIN, Eli, Knightdale, 27545 (US); CHATTAWAY, Adam, Windsor, SL42QG (GB)
(74) Representative: Dehns

(57) **Abstract**

Exemplary embodiments pertain to the art of first suppressants and, in particular, to maintaining a desired and constant blend of multiple fire suppressants during discharge. The present disclosure provides fire extinguisher assemblies utilizing a constant blend ratio of fire suppressant agents during discharge. More particularly, the present disclosure provides fire extinguisher assemblies utilizing a constant blend ratio of a first fire suppressant agent (14) (e.g., a low-boiling, high-volatility agent) and a second fire suppressant agent (16) (e.g., a higher-boiling, lower-volatility agent) during discharge. The embodiments and fire extinguisher assemblies described herein can help keep the pressure constant during discharge of the fire extinguisher assemblies.

## Description

### CROSS-REFERENCE TO RELATED APPLICATION

This application claims the benefit of U.S. Application No. 63/344,275 filed May 20, 2022, the disclosure of which is incorporated herein by reference in its entirety.

The present disclosure relates to fire extinguisher assemblies utilizing a constant blend ratio of fire suppressant agents during discharge and, more particularly, to fire extinguisher assemblies utilizing a constant blend ratio of a first fire suppressant agent (e.g., a low-boiling, high-volatility agent) and a second fire suppressant agent (e.g., a higher-boiling, lower-volatility agent) during discharge.

### BACKGROUND

In general, when a mix of fire suppressant agents (e.g., agent 1 and agent 2) is discharged from certain fire extinguisher assemblies, the ratio of the two agents in the discharge can change during the discharge. This is because as the extinguisher assembly empties the pressure reduces, and the amount of agent 1 dissolved in agent 2 decreases. This can have the effect of changing the ratio of agent 1 : agent 2 being discharged, which can affect the effectiveness of the fire suppressant from the fire extinguisher assembly and is therefore undesired.

### BRIEF DESCRIPTION

Exemplary embodiments pertain to the art of first suppressants and, in particular, to maintaining a constant blend of multiple fire suppressants during discharge.

The present disclosure provides for fire extinguisher assemblies utilizing a constant blend ratio of fire suppressant agents during discharge. More particularly, the present disclosure provides for fire extinguisher assemblies utilizing a constant blend ratio of a first fire suppressant agent (e.g., a low-boiling, high-volatility agent) and a second fire suppressant agent (e.g., a higher-boiling, lower-volatility agent) during discharge.

The present disclosure provides for a fire extinguisher assembly including a container housing a mixture of a first fire suppressant agent and a second fire suppressant agent; a reservoir in fluid communication with the container, the reservoir housing an additional amount of the first fire suppressant agent; wherein during discharge of the mixture of the first fire suppressant agent and the second fire suppressant agent from the container, a control member in fluid communication with the reservoir maintains the container at a constant pressure or provides a flow of the additional amount of the first fire suppressant agent from the reservoir to the container.

In addition to one or more of the features described, or as an alternative to any of the foregoing embodiments, the first fire suppressant agent is at least one of N₂, Ar or CO₂; and the second fire suppressant agent is at least one of a hydrofluorocarbon (HFC), a fluoroketone (FK), a hydrofluoroolefin (HFO), a hydrochlorofluoroolefin (HCFO), a hydrobromofluoroolefin (HBFO), or fluoroiodocarbon (FIC).

In addition to one or more of the features described, or as an alternative to any of the foregoing embodiments, wherein a desired mixture of the first fire suppressant agent and the second fire suppressant agent is discharged through a discharge head and then through a metering device to a plurality of discharge nozzles positioned throughout an area.

In addition to one or more of the features described, or as an alternative to any of the foregoing embodiments, wherein at least a portion of the first fire suppressant agent is dissolved in the second fire suppressant agent.

In addition to one or more of the features described, or as an alternative to any of the foregoing embodiments, the reservoir is a pressurized external reservoir, the reservoir in fluid communication with the container via a conduit line.

In addition to one or more of the features described, or as an alternative to any of the foregoing embodiments, wherein during discharge of the mixture of the first fire suppressant agent and the second fire suppressant agent from the container, a ratio of first fire suppressant agent to second fire suppressant agent remains constant at a desired ratio in the mixture during discharge.

In addition to one or more of the features described, or as an alternative to any of the foregoing embodiments, the reservoir is a high-pressure cylinder.

In addition to one or more of the features described, or as an alternative to any of the foregoing embodiments, the control member comprises a pressure regulator or comprises a valve and a metering device.

In addition to one or more of the features described, or as an alternative to any of the foregoing embodiments, the reservoir is an internal reservoir positioned within the container.

In addition to one or more of the features described, or as an alternative to any of the foregoing embodiments, the control member comprises a metering device on a conduit line, the conduit line in fluid communication with the internal reservoir and the container.

The present disclosure provides for a method for operating a fire extinguisher including providing a container housing a mixture of a first fire suppressant agent and a second fire suppressant agent; providing a reservoir in fluid communication with the container, the reservoir housing an additional amount of the first fire suppressant agent; and discharging the mixture of the first fire suppressant agent and the second fire suppressant agent from the container; wherein during discharge of the mixture of the first fire suppressant agent and the second fire suppressant agent from the container, a control member in fluid communication with the reservoir maintains the container at a constant pressure or provides a flow of the additional amount of the first fire suppressant agent from the reservoir to the container.

In addition to one or more of the features described, or as an alternative to any of the foregoing embodiments, the first fire suppressant agent is at least one of N₂, Ar or CO₂; and the second fire suppressant agent is at least one of a hydrofluorocarbon (HFC), a fluoroketone (FK), a hydrofluoroolefin (HFO), a hydrochlorofluoroolefin (HCFO), a hydrobromofluoroolefin (HBFO), or fluoroiodocarbon (FIC).

In addition to one or more of the features described, or as an alternative to any of the foregoing embodiments, wherein a desired mixture of the first fire suppressant agent and the second fire suppressant agent is discharged through a discharge head and then through a metering device to a plurality of discharge nozzles positioned throughout an area.

In addition to one or more of the features described, or as an alternative to any of the foregoing embodiments, wherein at least a portion of the first fire suppressant agent is dissolved in the second fire suppressant agent.

In addition to one or more of the features described, or as an alternative to any of the foregoing embodiments, the reservoir is a pressurized external reservoir, the reservoir in fluid communication with the container via a conduit line.

In addition to one or more of the features described, or as an alternative to any of the foregoing embodiments, wherein during discharge of the mixture of the first fire suppressant agent and the second fire suppressant agent from the container, a ratio of first fire suppressant agent to second fire suppressant agent remains constant at a desired ratio in the mixture during discharge.

In addition to one or more of the features described, or as an alternative to any of the foregoing embodiments, the reservoir is a high-pressure cylinder.

In addition to one or more of the features described, or as an alternative to any of the foregoing embodiments, the control member comprises a pressure regulator or comprises a valve and a metering device.

In addition to one or more of the features described, or as an alternative to any of the foregoing embodiments, the reservoir is an internal reservoir positioned within the container.

In addition to one or more of the features described, or as an alternative to any of the foregoing embodiments, the control member comprises a metering device on a conduit line, the conduit line in fluid communication with the internal reservoir and the container.

The above described and other features are exemplified by the following figures and detailed description.

Any combination or permutation of embodiments is envisioned. Additional features, functions and applications of the disclosed assemblies, systems and methods of the present disclosure will be apparent from the description which follows, particularly when read in conjunction with the appended figures. All references listed in this disclosure are hereby incorporated by reference in their entireties.

### BRIEF DESCRIPTION OF THE DRAWINGS

The following descriptions should not be considered limiting in any way. With reference to the accompanying drawings, like elements are numbered alike.

Features and aspects of embodiments are described below with reference to the accompanying drawings, in which elements are not necessarily depicted to scale.

Example embodiments of the present disclosure are further described with reference to the appended figures. It is to be noted that the various features, steps, and combinations of features/steps described below and illustrated in the figures can be arranged and organized differently to result in embodiments which are still within the scope of the present disclosure. To assist those of ordinary skill in the art in making and using the disclosed assemblies, systems and methods, reference is made to the appended figures, wherein:
FIG. 1 is a schematic of system before discharge that includes a container that includes a liquid phase of two mixed agents and a headspace (e.g., gaseous headspace);
FIG. 2 shows the system of FIG. 1 as a discharge occurs and the ratio of the agents in the liquid phase in the container changes as the first agent moves into the headspace;
FIG. 3 shows one approach to improve the situation described in FIGS. 1 and 2 and includes the first agent in a pressurized reservoir in combination with a control member in the form of a pressure regulator to keep the pressure in the headspace constant;
FIG. 4 shows one approach to improve the situation described in FIGS. 1 and 2 and includes the first agent in a pressurized reservoir in combination with a control member in the form of a metering device (flow controller) to keep the flow of the first agent from the pressurized reservoir constant during discharge; and
FIG. 5 shows one approach to improve the situation described in FIGS. 1 and 2 where the control member of FIGS. 3 or 4 (metering device of FIG. 4; or pressure regulator of FIG. 3) is located in the container.

### DETAILED DESCRIPTION

A detailed description of one or more embodiments of the disclosed apparatus and method are presented herein by way of exemplification and not limitation with reference to the Figures.

The example embodiments disclosed herein are illustrative of fire extinguisher assemblies, and systems of the present disclosure and methods/techniques thereof. It should be understood, however, that the disclosed embodiments are merely examples of the present disclosure, which may be embodied in various forms. Therefore, details disclosed herein with reference to example fire extinguisher assemblies and associated processes/techniques of fabrication/assembly and use are not to be interpreted as limiting, but merely as the basis for teaching one skilled in the art how to make and use the assemblies/systems and/or alternative assemblies/systems of the present disclosure.

The present disclosure provides fire extinguisher assemblies utilizing a constant blend ratio of fire suppressant agents during discharge. More particularly, the present disclosure provides fire extinguisher assemblies utilizing a constant blend ratio of a first fire suppressant agent (e.g., a low-boiling, high-volatility agent) and a second fire suppressant agent (e.g., a higher-boiling, lower-volatility agent) during discharge.

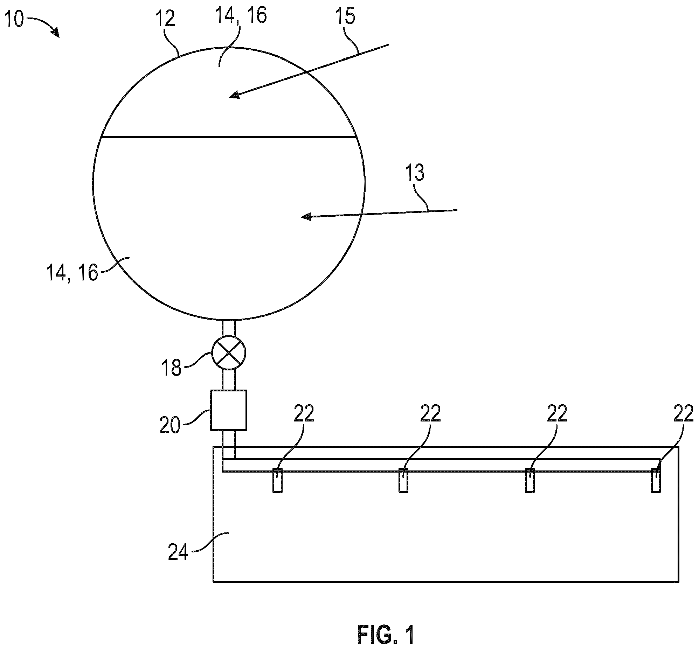

As shown in FIG. 1, in certain fire extinguisher assemblies 10, the fire extinguisher assembly 10 includes a container 12 that includes fire suppressant agents 14, 16 that are released through a discharge head 18 (e.g., and then through a metering device 20 and to discharge nozzles 22 positioned throughout an area 24, such as an aircraft cargo compartment area 24). In such suppression applications it may be necessary to use a mixture of two fire suppressant agents 14, 16 stored in the container 10 (e.g., tank 10). For instance, if two agents 14, 16 are used, the first fire suppressant agent 14 can be a low-boiling, high-volatility agent 14. Examples of such a first agent 14 include, for example and without limitation, N₂, Ar, and CO₂. The second fire suppressant agent 16 can be a higher-boiling, lower-volatility agent 16. Examples for second agent 16 include, for example and without limitation: a hydrofluorocarbon (HFC), a fluoroketone (FK), a hydrofluoroolefin (HFO), a hydrochlorofluoroolefin (HCFO), a hydrobromofluoroolefin (HBFO), or fluoroiodocarbon (FIC).

FIG. 1 is a schematic of a fire extinguisher assembly 10 before discharge that includes the container 12 having a liquid phase 13 of two mixed agents 14, 16, and a headspace 15 (e.g., gaseous headspace 15) also including the two mixed agents 14, 16.

As shown in FIG. 1, the first agent 14 can be more volatile than the second agent 16, and the first agent 14 resides preferentially in the headspace 15. The second agent 16 is less volatile than the first agent 14, and the second agent resides preferentially in the liquid phase 13. As such, the headspace 15 can include mainly the first agent 16 and some of the second agent 16. Moreover, the liquid phase 13 can include mainly the second agent 16 and some of the first agent 14. As shown in FIG. 1 and prior to discharge of assembly 10, the liquid phase 13 of container 12 includes the desired ratio of the first agent 14: second agent 16.

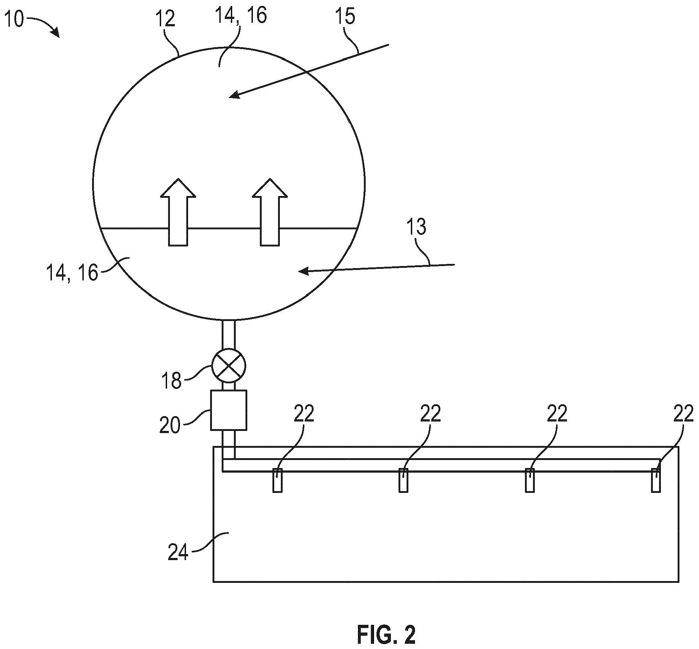

It has been discovered that under a given set of conditions, some of the first fire suppressant agent 14 will dissolve in the second fire suppressant agent 16 according to its solubility parameters. As shown in FIG. 2, when a mix of fire suppression agents 14, 16 is discharged from assembly 10 via discharge head 18, the ratio of the two agents 14, 16 in the discharge can change during the discharge. This is because as the container 12 empties the pressure in container 12 reduces, and the amount of the first agent 14 dissolved in the second agent 16 decreases. This has the effect of changing the ratio of first agent 14:second agent 16 being discharged from the liquid phase 13 and via discharge head 18, which can affect the effectiveness of the fire suppressant 14, 16 discharged via discharge head 18.

As shown in FIG. 2, as the discharge of agents 14, 16 continues through discharge head 18, the tank 12 empties and the first agent 14 (e.g., more volatile agent) moves into the headspace 15. As such, headspace 15 now includes more of the first agent 14 and less of the second agent 16 (compared to FIG. 1). Moreover, the liquid phase 13 now includes more of the second agent 16 and less of the first agent 14 (compared to FIG. 1), and this is no longer the desired ratio of the first agent 14:second agent 16 in the liquid phase 13 for discharge.

FIGS. 1 and 2 graphically show illustrations of the above described problem discovered by the inventors hereof.

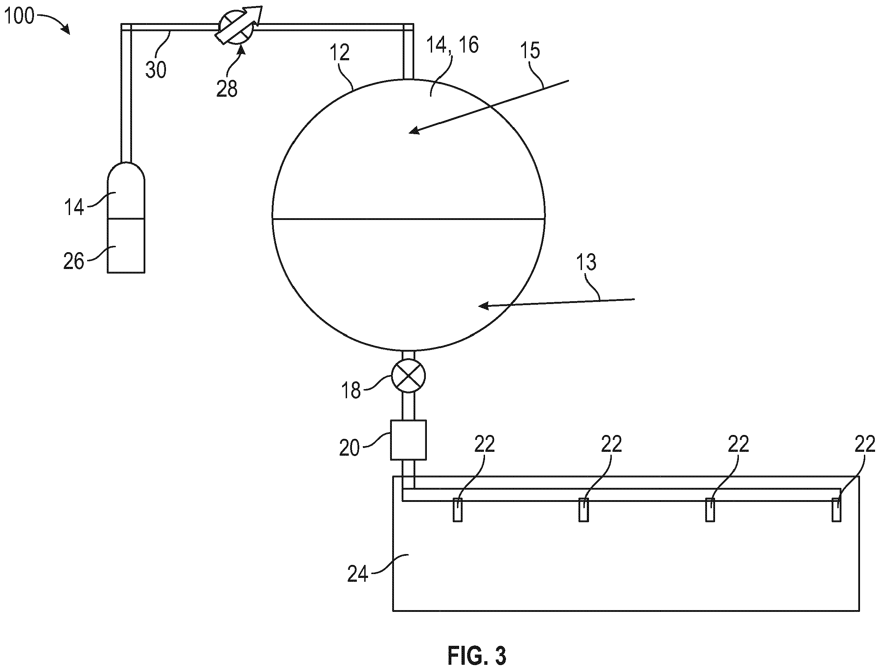

FIG. 3 shows an example approach to improve the situation described in FIGS. 1 and 2, and fire extinguisher assembly 100 also includes additional first agent 14 in a pressurized external reservoir 26 (e.g., external to tank 12) in combination with a control member in the form of a pressure regulator 28 on conduit line 30 to keep the pressure in the headspace 15 constant (e.g., prior to and/or during discharge) and to allow a flow of the additional amount of the first fire suppressant agent 14 from the reservoir 26 to the container 12. In general, conduit line 30 is in fluid communication with external reservoir 26 and tank 12.

As shown in FIG. 3, the external reservoir 26 includes additional first agent 14 to top up the headspace 15 and keep the pressure of tank 12 constant during discharge of assembly 100 via discharge head 18. This also has the benefit of keeping the ratio of the first agent 14:second agent 16 constant (e.g., and at the desired ratio) during discharge of agents 14, 16 via discharge head 18 of assembly 100.

The pressure regulator 28 can be operated and configured to keep the pressure of headspace 15 of tank 12 constant during discharge of assembly 100. As shown in FIG. 3, the headspace 15 of assembly 100 includes mainly the first agent 14 and some of the second agent 16. The liquid phase 13 of assembly 100 includes mainly the second agent 16 and some of the first agent 14.

In general, assembly 100 of FIG. 3 is configured to keep the pressure of tank 12 constant during discharge of assembly 100. As shown in FIG. 3, this may be accomplished by providing a small reservoir 26 of first agent 14 and a pressure regulator 28 set to a desired pressure to control release of first agent 14 into the container/tank 12. The reservoir 26 can be small (e.g., very small) compared to the container/tank 12. It is noted that if the first agent 14 is a permanent gas a small high-pressure cylinder 26 can be used; if the first agent 14 is a compressible fluid, like CO₂, this can be stored as a liquid in reservoir 26.

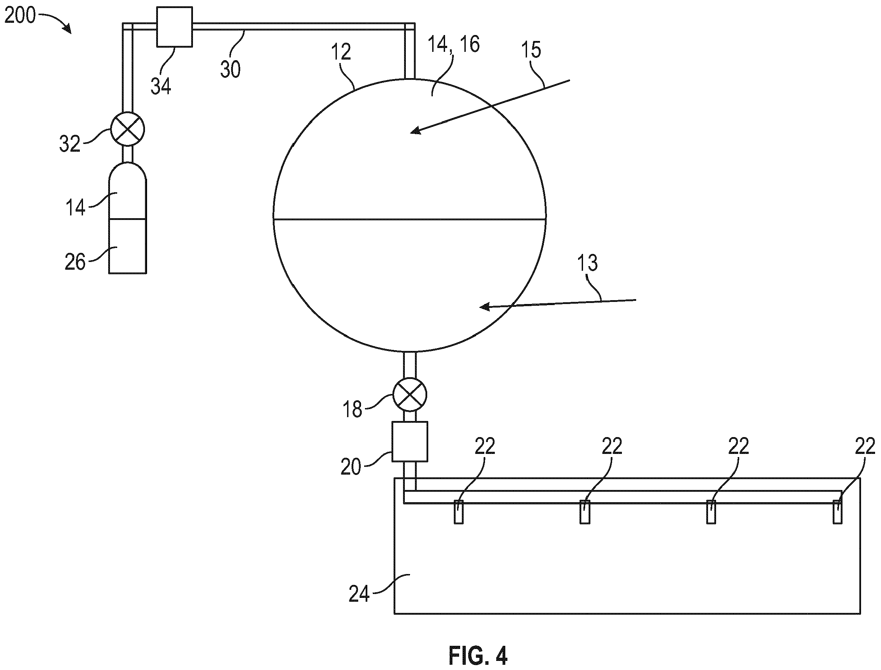

Alternatively to assembly 100 and as shown in FIG. 4, a control member in the form of a flow metering device 34 can be used control the flow of the first agent 14 into the container/tank 12. FIG. 4 shows another example approach to improve the situation described in FIGS. 1 and 2, and fire extinguisher assembly 200 also includes additional first agent 14 in a pressurized external reservoir 26 (e.g., external to tank 12) in combination with a control member in the form of valve 32 and a metering device 34 on conduit line 30 to keep the composition of the first and second agents in the headspace 15 constant (e.g., prior to and/or during discharge) and to allow a flow of the additional amount of the first fire suppressant agent 14 from the reservoir 26 to the container 12. In general, conduit line 30 is in fluid communication with external reservoir 26 and tank 12.

As shown in FIG. 4, the external reservoir 26 includes additional first agent 14 to top up the headspace 15 and keep the flow of the first agent from the pressurized reservoir constant during discharge of assembly 200 via discharge head 18. This also has the benefit of keeping the ratio of the first agent 14:second agent 16 constant (e.g., and at the desired ratio) during discharge of agents 14, 16 via discharge head 18 of assembly 200.

The valve 32 and/or metering device 34 can be operated and configured to keep the flow of the first agent from the pressurized reservoir constant during discharge of assembly 200. As shown in FIG. 4, the headspace 15 of assembly 200 includes mainly the first agent 14 and some of the second agent 16. The liquid phase 13 of assembly 200 includes mainly the second agent 16 and some of the first agent 14.

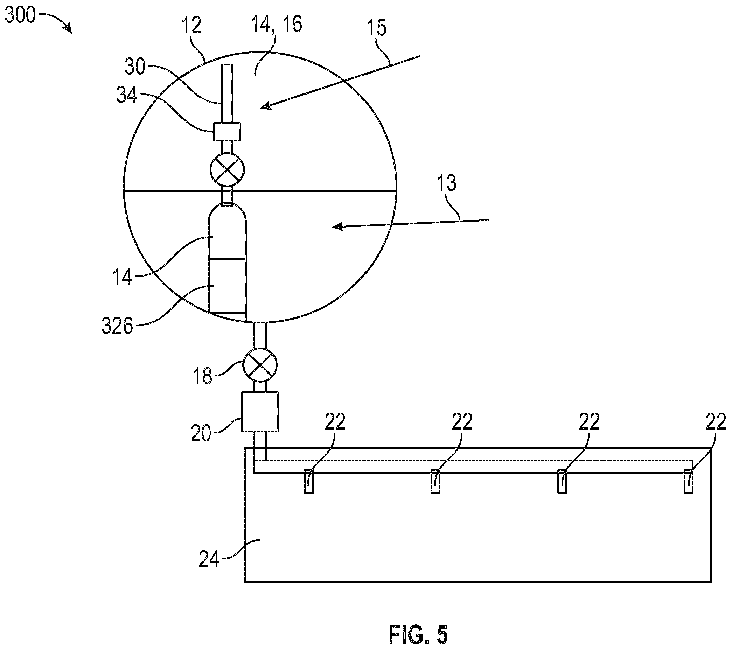

FIG. 5 shows another example approach to improve the situation described in FIGS. 1 and 2, and where fire extinguisher assembly 300 also includes additional first agent 14 in a pressurized internal reservoir 326 (e.g., internal within tank 12) in combination with a control member in the form of a metering device 34 on conduit line 30 to keep the flow of the first agent from the pressurized reservoir 326 constant during discharge. It is noted that a pressure regulator 28 or the like could be utilized with internal reservoir 326 in lieu of or in addition to metering device 34 of assembly 300 to keep the pressure in the headspace 15 constant. In general, conduit line 30 is in fluid communication with internal reservoir 326 and tank 12.

As shown in FIG. 5, the internal reservoir 326 includes additional first agent 14 to top up the headspace 15 and keep the flow of the first agent from the pressurized reservoir 326 constant during discharge of assembly 300 via discharge head 18 (via metering device 34). This also has the benefit of keeping the ratio of the first agent 14:second agent 16 constant (e.g., and at the desired ratio) during discharge of agents 14, 16 via discharge head 18 of assembly 300.

The metering device 34 can be operated and configured to keep the flow of the first agent from the pressurized reservoir 326 constant during discharge of assembly 300. As shown in FIG. 5, the headspace 15 of assembly 300 includes mainly the first agent 14 and some of the second agent 16. The liquid phase 13 of assembly 300 includes mainly the second agent 16 and some of the first agent 14.

As shown in FIG. 5, it is noted that it is possible (and desirable) to position/store the reservoir 326 inside the tank 12 of extinguisher assembly 300 (e.g., to minimize leaks, etc.).

As such, the embodiments shown in FIGS. 3-5 and/or described herein can help keep the pressure constant during discharge of assemblies 100, 200, 300, and/or keep the flow of the first agent from the pressurized reservoir constant during discharge.

There are many benefits of the assemblies 100, 200, 300, systems and methods of the present disclosure. Embodiments disclosed herein than can help maintain a desired blend ratio of agents 14, 16 in the discharged liquid phase of a fire suppressant having at least two agents (14, 16) from assembly 100, 200, 300. The disclosed assemblies 100, 200, 300 can allow for improved fire extinguishing efficiency and also improved pressure/temperature characteristics (of agents 14, 16).

By effectively using an additional cylinder 26, 326 to include some of first agent 14, it can be possible to employ higher fill ratios of the agent blend 14, 16 in the tank 12 of extinguisher 100, 200 without compromising discharge efficiency.

A constant head pressure can be maintained during discharge of assembly 100, 200, 300, and thus flow characteristics such as mass flow rate, spray angle, and spray penetration will be consistent throughout discharge of assembly 100, 200, 300.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

The term "about" is intended to include the degree of error associated with measurement of the particular quantity based upon the equipment available at the time of filing the application.

The ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combinations" is inclusive of blends, mixtures, alloys, reaction products, and the like. The terms "first," "second," and the like, do not denote any order, quantity, or importance, but rather are used to distinguish one element from another. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments. A "combination thereof is open and includes any combination comprising at least one of the listed components or properties optionally together with a like or equivalent component or property not listed.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

Although the assemblies, systems and methods of the present disclosure have been described with reference to example embodiments thereof, the present disclosure is not limited to such example embodiments and/or implementations. Rather, the assemblies, systems and methods of the present disclosure are susceptible to many implementations and applications, as will be readily apparent to persons skilled in the art from the disclosure hereof. The present disclosure expressly encompasses such modifications, enhancements and/or variations of the disclosed embodiments. Since many changes could be made in the above construction and many widely different embodiments of this disclosure could be made without departing from the scope thereof, it is intended that all matter contained in the drawings and specification shall be interpreted as illustrative and not in a limiting sense. Additional modifications, changes, and substitutions are intended in the foregoing disclosure. Accordingly, it is appropriate that the appended claims be construed broadly and in a manner consistent with the scope of the disclosure.

## Claims

1. A fire extinguisher assembly (10) comprising:
a container (12) housing a mixture of a first fire suppressant agent (14) and a second fire suppressant agent (16);
a reservoir (26) in fluid communication with the container (12), the reservoir (26) housing an additional amount of the first fire suppressant agent (14);
wherein during discharge of the mixture of the first fire suppressant agent (14) and the second fire suppressant agent (16) from the container (12), a control member in fluid communication with the reservoir (26) maintains the container (12) at a constant pressure or provides a flow of the additional amount of the first fire suppressant agent (14) from the reservoir to the container (12).

2. The fire extinguisher assembly of claim 1, wherein the first fire suppressant agent (14) is at least one of Nz, Ar or CO₂; and
wherein the second fire suppressant agent (16) is at least one of a hydrofluorocarbon (HFC), a fluoroketone (FK), a hydrofluoroolefin (HFO), a hydrochlorofluoroolefin (HCFO), a hydrobromofluoroolefin (HBFO), or fluoroiodocarbon (FIC).

3. The fire extinguisher assembly of claim 1 or claim 2, configured such that a desired mixture of the first fire suppressant agent (14) and the second fire suppressant agent (16) is discharged through a discharge head (18) and then through a metering device (34) to a plurality of discharge nozzles (22) positioned throughout an area.

4. The fire extinguisher assembly of any preceding claim, wherein at least a portion of the first fire suppressant agent (14) is dissolved in the second fire suppressant agent (16).

5. The fire extinguisher assembly of any preceding claim, wherein the reservoir (26) is a pressurized external reservoir, the reservoir (26) in fluid communication with the container (12) via a conduit line (30).

6. The fire extinguisher assembly of any preceding claim, wherein during discharge of the mixture of the first fire suppressant agent (14) and the second fire suppressant agent (16) from the container (12), a ratio of first fire suppressant agent (14) to second fire suppressant agent (16) remains constant at a desired ratio in the mixture during discharge.

7. The fire extinguisher assembly of any preceding claim, wherein the reservoir (26) is a high-pressure cylinder.

8. The fire extinguisher assembly of any preceding claim, wherein the control member comprises a pressure regulator (28) or comprises a valve (32) and a metering device (34).

9. The fire extinguisher assembly of any preceding claim, wherein the reservoir (26) is an internal reservoir positioned within the container (12).

10. The fire extinguisher assembly of claim 9, wherein the control member comprises a metering device (34) on a conduit line (30), the conduit line (30) in fluid communication with the internal reservoir and the container (12).

11. A method for operating a fire extinguisher comprising:
providing a container (12) housing a mixture of a first fire suppressant agent (14) and a second fire suppressant agent (16);
providing a reservoir (26) in fluid communication with the container (12), the reservoir (26) housing an additional amount of the first fire suppressant agent (14); and
discharging the mixture of the first fire suppressant agent (14) and the second fire suppressant agent (16) from the container (12);
wherein during discharge of the mixture of the first fire suppressant agent (14) and the second fire suppressant agent (16) from the container (12), a control member in fluid communication with the reservoir (26) maintains the container (12) at a constant pressure or provides a flow of the additional amount of the first fire suppressant agent (14) from the reservoir (26) to the container (12).

12. The method of claim 11, wherein the first fire suppressant agent (14) is at least one of N₂, Ar or CO₂; and
wherein the second fire suppressant agent (16) is at least one of a hydrofluorocarbon (HFC), a fluoroketone (FK), a hydrofluoroolefin (HFO), a hydrochlorofluoroolefin (HCFO), a hydrobromofluoroolefin (HBFO), or fluoroiodocarbon (FIC).

13. The method of claim 11 or claim 12, wherein a desired mixture of the first fire suppressant agent (14) and the second fire suppressant agent (16) is discharged through a discharge head (18) and then through a metering device (34) to a plurality of discharge nozzles (22) positioned throughout an area.

14. The method of any of claims 11-13, wherein at least a portion of the first fire suppressant agent (14) is dissolved in the second fire suppressant agent (16).

15. The method of any of claims 11-14, wherein the reservoir (26) is a pressurized external reservoir, the reservoir in fluid communication with the container (12) via a conduit line (30).
